# EUROPÄISCHE PATENTSCHRIFT

(11) **EP 2 321 673 B1**
(45) Veröffentlichungstag und Bekanntmachung des Hinweises auf die Patenterteilung: **20.02.2019**
(21) Anmeldenummer: 09777645.4
(22) Anmeldetag: 04.08.2009
(51) Int. Cl.: G02B 3/00, B42D 15/00, G07D 7/20, B29D 11/00, B32B 27/00, B42D 25/342, G07D 7/207

(54) **VERFAHREN ZUM HERSTELLEN VON MIKROLINSEN**
METHOD FOR PRODUCING MICROLENSES
PROCÉDÉ DE PRODUCTION DE MICROLENTILLES

(30) Priorität: 05.08.2008 DE 102008036482
(43) Veröffentlichungstag der Anmeldung: 18.05.2011
(73) Patentinhaber: Giesecke+Devrient Currency Technology GmbH, 81677 München (DE)
(72) Erfinder: KECK, Angelika, 81667 München (DE); MENGEL, Christoph, 83607 Holzkirchen (DE); VOIT, Max, 83671 Benedikbeuern (DE)
(86) Internationale Anmeldenummer: PCT/EP2009/005642
(87) Internationale Veröffentlichungsnummer: WO 2010/015383

(56) Entgegenhaltungen:
- WO-A1-2007/040138
- DE-A1-102004 014 140
- DE-A1-102004 037 825
- GB-A- 2 416 738
- JP-A- 1 031 101
- US-A- 1 943 995
- US-B1- 6 870 681

## Beschreibung

Die Erfindung betrifft ein Mikrolinsensubstrat, welches als ein Verifikationsmittel oder Sicherheitsmerkmal für einen Datenträger eingesetzt werden kann, sowie ein Herstellungsverfahren für Mikrolinsen und für ein solches Mikrolinsensubstrat.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Gegenstands gestatten und die zugleich als Schutz vor unerlaubter Reproduktion dienen.

Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden. Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, und auch kartenförmige Datenträger, insbesondere Chipkarten, sowie Produktsicherungselemente, wie Etiketten, Siegel, Verpackungen und dergleichen.

Ein Sicherheitselement kann in einen solchen Datenträger, beispielsweise in eine Banknote oder eine Chipkarte, eingebettet sein oder als selbsttragendes Transferelement ausgebildet sein, beispielsweise als Patch oder als Etikett, das nach seiner Herstellung auf einen zu sichernden Datenträger oder sonstigen Gegenstand aufgebracht wird.

Sicherheitselemente erzeugen häufig einen gut sichtbaren optischen Eindruck, weswegen solche Sicherheitselemente neben ihrer Funktion als Sicherungsmittel bisweilen auch ausschließlich als dekorative Elemente verwendet werden.

Um eine Fälschung oder Nachstellung von Sicherheitselementen beispielsweise mit hochwertigen Farbfotokopiergeräten zu verhindern, weisen Sicherheitselemente häufig optisch variable Elemente auf, die dem Betrachter unter verschiedenen Betrachtungswinkeln einen unterschiedlichen Bildeindruck vermitteln und etwa einen unterschiedlichen Farbeindruck oder auch unterschiedliche graphische Motive zeigen. In diesem Zusammenhang ist beispielsweise die Verwendung von beugungsoptischen Mikro- oder Nanostrukturen in Form von Prägehologrammen oder anderen hologrammähnlichen Beugungsstrukturen bekannt.

Zur Erzeugung optisch variabler Elemente ist weiterhin die Verwendung von Mikrolinsen-Anordnungen bekannt. Beispielsweise offenbart die EP 0 219 012 A2 eine regelmäßige Anordnung von parallelen, aneinanderstoßenden Zylinderlinsen, welche in Abhängigkeit von der Blickrichtung wegen der konvergierenden Wirkung der Zylinderlinsen nur einen streifenförmigen Bereich jeweils unterhalb einer Zylinderlinse zeigt. Unterhalb der Zylinderlinsen sind dabei streifenförmig zerlegte Bilder angeordnet, welche sich für einen Betrachter je nach Blickrichtung zu einem bestimmten Gesamtbild zusammensetzen. Je nach Betrachtungswinkel werden dabei bei horizontaler Anordnung der Zylinderlinsen verschiedene Bilder sichtbar, wodurch Kippbilder und Animationen erzeugt werden können. Liegen die Zylinderlinsen in vertikaler Richtung, so können stereoskopische Parallaxen in das Bild eingebracht werden, wodurch für den Betrachter ein räumlicher Eindruck erzeugt werden kann.

Neben der Verwendung von Zylinderlinsen ist auch die Verwendung einer regelmäßigen Anordnung von sphärischen Linsen bekannt, wie sie beispielsweise in einer Moiré-Vergrößerungsanordnung verwendet wird.

Die US 5 712 731 A betrifft die Verwendung einer solchen Moire-Vergrößerungsanordnung als Sicherheitsmerkmal. Die dort beschriebene Sicherheitsvorrichtung weist eine regelmäßige Anordnung von im Wesentlichen identischen gedruckten Mikrobildern auf, sowie eine regelmäßige zweidimensionale Anordnung von im Wesentlichen identischen sphärischen Mikrolinsen. Die Mikrolinsenanordnung weist dabei im Wesentlichen dieselbe Teilung wie die Mikrobildanordnung auf. Wird die Mikrobildanordnung durch die Mikrolinsenanordnung betrachtet, so werden in den Bereichen, in denen die beiden Anordnungen im Wesentlichen im Register stehen, für den Betrachter eine oder mehrere vergrößerte Versionen der Mikrobilder erzeugt.

Die prinzipielle Funktionsweise derartiger Moire-Vergrößerungsanordnungen ist in dem Artikel "The moire magnifier", M.C. Hutley, R. Hunt, R.F. Stevens and P. Savander, Pure Appl. Opt. 3 (1994), pp. 133-142, beschrieben. Kurz gesagt bezeichnet Moire-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, das in diesem Fall als vergrößertes und gegebenenfalls gedrehtes Bild der wiederholten Elemente des Bildrasters erscheint. Weitere Ausgestaltungsvarianten und Effekte, die auf diesem Mechanismus beruhen, sind beispielsweise in dem Artikel "Properties of moire magnifiers", Kamal et al., Optical Engineering 37 (11), S. 3007-3014 (November 1998), beschrieben.

Regelmäßige Mikrolinsenanordnungen können auch als Verifikationsmittel für Sicherheitselemente verwendet werden, wie dies in der EP 1147 912 B1 beschrieben ist. Dabei werden bestimmte Strukturen eines Sicherheitselementes erst bei Betrachtung durch ein solches Verifikationselement für den Benutzer sichtbar, so dass die Funktion des Sicherheitselements für einen unbefangenen Betrachter verborgen werden kann.

Zur Herstellung solcher Mikrolinsenanordnungen sind im Stand der Technik verschiedene Techniken bekannt. In der EP 1 878 584 A2 wird dazu das Drucken eines optischen Lacks auf ein Trägersubstrat mithilfe einer Tiefdruckplatte offenbart. In der Tiefdruckplatte sind dabei Vertiefungen eingebracht, die die Negativform der gewünschten Linsenanordnung bilden. Weiterhin offenbart diese Schrift auch die Verwendung der Tiefdruckplatten als Prägewerkzeug, mit dessen Hilfe die gewünschte Mikrolinsenanordnung beispielsweise in eine Laminierschicht eingeformt wird. Derartige Verfahren sind auch in der EP 0 698 256 B2 beschrieben, wobei dort alternativ auch die Verwendung von Photoresistschichten in Verbindung mit geeigneten Masken zur Herstellung von Mikrolinsen offenbart wird.

In der DE 10 2006 003 798 A1 wird als weitere Alternative das partielle Auftragen einer Primerschicht genannt, welche eine bereichsweise Veränderung der Oberflächenspannung erzeugt, die zur Herstellung der Mikrolinsen verwendet werden kann.

Aus der letztgenannten Schrift, wie auch aus der WO 2006/016265 A1, ist als weitere Alternative ein Tintenstrahlverfahren bekannt, bei welchem ein transluzenter Kunststoff, beispielsweise ein optischer Lack, auf einer rauen Oberfläche mithilfe eines Tintenstrahl-Druckkopfs in Form von Mikrotröpfchen an den gewünschten Stellen positioniert wird. Bei diesem Verfahren müssen die verwendeten Materialien geeignete Oberflächenspannungen aufweisen, um ein Verlaufen der aufgebrachten flüssigen Mikrotröpfchen zu vermeiden.

Aus der WO 2007/040138 A1 ist ferner ein Verfahren zur Herstellung einer Elektrogussform bekannt. Dabei wird eine leitfähige Schicht auf der Oberfläche eines Elements durch Aufdampfen erzeugt und auf deren Oberfläche eine Abformschicht mittels galvanischer Abscheidung ausgebildet. Die Gussform kann anschließend mit einem strahlungshärtenden Harz zur Herstellung von Mikrolinsen gefüllt werden.

Die US 1,943,995 A beschreibt ein Verfahren zur Herstellung einer Glasverbundkonstruktion, die auf einer ihrer Oberflächen Linsen und auf ihrer anderen Oberfläche alternierende Rippen und Rillen aufweist.

Alle bekannten Mikrolinsenanordnungen zeigen einen mehrschichtigen Aufbau und erfordern entsprechend komplexe und vielstufige Herstellungsverfahren. Weiterhin müssen insbesondere bei Tintenstrahlverfahren das Substrat und der zur Erzeugung der Mikrolinsen aufgebrachte Kunststoff im Zusammenspiel bestimmte Eigenschaften zeigen, beispielsweise bezüglich der Oberflächenspannung, um ein ungewolltes Verfließen des beim Aufbringen flüssigen Kunststoffs auf dem Substrat zu vermeiden. Bei den weiterhin bekannten, oben beschriebenen Tiefdruck- und Prägeverfahren muss das exakte Abbild, d.h. die Negativform der zu erzeugenden Mikrolinsen, in die Tiefdruckplatte eingebracht werden, was ebenfalls umfangreiche und komplexe Vorbereitungsschritte zum Bereitstellen einer solchen Tiefdruckplatte im Vorfeld der Herstellung einer Mikrolinsenanordnung bedingt.

Davon ausgehend liegt der Erfindung die Aufgabe zugrunde, die Nachteile des Standes der Technik zu vermeiden und insbesondere ein Mikrolinsensubstrat, welches auch als ein Verifikationsmittel oder Sicherheitsmerkmal für einen Datenträger eingesetzt werden kann und welches einfach aufgebaut ist, sowie ein Herstellungsverfahren für Mikrolinsen und für ein solches Mikrolinsensubstrat anzugeben, welches eine vereinfachte Herstellung gestattet.

Diese Aufgabe wird erfindungsgemäß durch ein Mikrolinsensubstrat sowie ein Herstellungsverfahren für Mikrolinsen und für ein solches Mikrolinsensubstrat mit den Merkmalen der unabhängigen Ansprüche gelöst. Ein Datenträger mit einem solchen Mikrolinsensubstrat sowie die Verwendung eines

Trägersubstrats als Linsenkörper zur Herstellung von Mikrolinsen sind in den nebengeordneten Ansprüchen angegeben. Die abhängigen Ansprüche betreffen bevorzugte Ausgestaltungen und Weiterbildungen der Erfindung.

Der Erfindung liegt die Erkenntnis zugrunde, dass ein vorstrukturiertes Trägersubstrat mit Erhebungen und Vertiefungen als Abformkörper zur Herstellung von Mikrolinsen verwendet werden kann. Ein solches vorstrukturiertes Trägersubstrat kann durch Verprägen eines geeigneten Trägersubstrats geschaffen werden. Hierzu können an sich bekannte Prägewerkzeuge verwendet werden. Bevorzugt wird das Trägersubstrat in einem Tiefdruckverfahren blindverprägt. Dabei werden in einer zur Blindverprägung verwendeten Tiefdruckplatte Vertiefungen, insbesondere Gravuren, geschaffen, welche auf dem Trägersubstrat geeignete Prägestrukturen erzeugen. Dabei können beispielsweise anhand von Gravurtiefe und -breite die Form und Abmessung der Erhebungen und Vertiefungen und somit der herzustellenden Mikrolinsen gezielt beeinflusst werden.

Bei der Blindverprägung geschieht das Verprägen mittels einer Tiefdruckplatte ohne Farbfüllung, das heißt in den Vertiefungen der Tiefdruckplatte ist keine Druckfarbe vorgesehen. Dabei geschieht das Verprägen unter sehr hohem Anpressdruck, das heißt zwischen der Tiefdruckplatte und einer Gegendruckplatte, welche mit einem speziellen dünnen Gummituch bespannt sein kann, wirken sehr hohe Kräfte, die ein dauerhaftes Verprägen des Trägersubstrats gewährleisten.

Das Tiefdruckverfahren ist vorzugsweise ein Linien- bzw. Stichtiefdruck-Verfahren, bei welchem in die Tiefdruckplatte bzw. Stichtiefdruckplatte mithilfe eines manuell oder maschinell geführten, rotierenden Stichels Vertiefungen, beispielsweise in Form von Linien, in die Druckplatte eingraviert werden. Es kann aber auch ein Rastertiefdruck-Verfahren eingesetzt werden, bei welchem die Vertiefungen in die Tiefdruckplatte geätzt werden. Darüber hinaus kann eine Tiefdruckplatte selbstverständlich auch mittels eines geeigneten Lasers mit den vorgesehenen Gravuren versehen werden.

In dem Tiefdruckverfahren wird das Trägersubstrat mittels der Tiefdruckplatte und einer Gegendruckplatte mit hohem Druck verprägt. Aufgrund der Vertiefungen in der Tiefdruckplatte entstehen auf der Vorderseite des Trägersubstrats, welche der Tiefdruckplatte zugewandt ist, Erhebungen und auf der gegenüberliegenden Rückseite des Substrats entsprechende Vertiefungen. Die Vertiefungen in der Tiefdruckplatte sind dabei derart ausgebildet, dass die Erhebungen und/oder die Vertiefungen des verprägten Substrats zum Abformen von Mikrolinsen geeignet sind. Damit wird eine einfache Möglichkeit zur Herstellung von zur Abformung von Mikrolinsen geeigneten Erhebungen und/oder Vertiefungen geschaffen.

Mikrolinsen werden dann hergestellt, indem ein zur Bildung der Mikrolinsen geeigneter transluzenter Kunststoff auf zumindest eine der beiden Seiten des blindverprägten Trägersubstrats im Bereich der Erhebungen oder Vertiefungen aufgebracht wird. Vorzugsweise werden die Vertiefungen auf der Rückseite des Trägersubstrats mit einem solchen transluzenten Kunststoff befüllt und/oder die Erhebungen auf der Vorderseite des Trägersubstrats mit einem solchen transluzenten Kunststoff vollflächig bedeckt. Im Rahmen der vorliegenden Beschreibung bedeutet "transluzent" durchscheinend im Sinn einer gewissen oder vollständigen Lichtdurchlässigkeit und schließt somit auch Transparenz mit ein. Eine transluzente Schicht erlaubt es, die hinter bzw. unter ihr befindlichen Objekte wahrzunehmen, auch wenn durch die transluzente Schicht die Helligkeit der Objekte reduziert und/oder die Farbe der Objekte verändert sein kann. Unter transluzentem Kunststoff wird entsprechend ein transparenter Kunststoff oder ein semitransparenter Kunststoff, insbesondere ein lasierender Kunststoff, verstanden.

Bei der Herstellung von Mikrolinsen durch Befüllen der Vertiefungen auf der Rückseite des Trägersubstrats mit dem transluzenten Kunststoff wird die räumliche Ausdehnung der Linse auf dem Trägersubstrat nicht nur durch Materialparameter, wie der Oberflächenspannung des transluzenten Kunststoffs auf dem Trägersubstrat, bestimmt, sondern vorteilhafterweise auch durch die räumliche Geometrie der im Substrat erzeugten Vertiefung. Dadurch bestehen mehr Freiheitsgrade bei der Auswahl der Materialien. Zusätzlich wird durch die Vertiefung auch die räumliche Lage des aufgebrachten Kunststoffs bestimmt und auf diese Weise die zu bildende Mikrolinse an der vorgesehenen Position zentriert. Somit ist eine geringere Ortsgenauigkeit beim Aufbringen des transluzenten Kunststoffs erforderlich.

Die Oberflächenform der Mikrolinse wird auf ihrer dem Trägersubstrat zugewandten Seite durch die Form der Vertiefung bestimmt. In diesem Zusammenhang liegt der Erfindung die Erkenntnis zugrunde, dass die Rückseite eines im Stich- oder Rastertiefdruck mit einer entsprechend ausgestalteten Tiefdruckplatte verprägten Trägersubstrats eine für die Ausbildung von Mikrolinsen geeignete nahezu sphärische oder zylinderförmige Prägestruktur aufweist. Eine solche Prägestruktur ergibt sich auf der Rückseite des Trägersubstrats sowohl bei kugel-, pyramiden- bzw. linienförmigen Vertiefungen in der Tiefdruckplatte als auch bei anders gestalteten Gravuren oder Ätzungen. Durch Vertiefungen in der Tiefdruckplatte in Form von konzentrischen Ringen kann auf der Rückseite des Trägersubstrats auch eine Prägestruktur geschaffen werden, die zur Ausbildung einer Fresnellinse geeignet ist.

Beim Füllen der vorzugsweise sphärischen oder zylinderförmigen Prägestruktur auf der Rückseite des Trägersubstrats ergibt sich somit eine kugel- bzw. zylindersymmetrische Linsenoberfläche auf der Seite des Trägersubstrats. Zusätzlich können durch die Form der Vertiefung in der Tiefdruckplatte beispielsweise die Breite und die Höhe der Linse bestimmt werden. Geeignete Techniken zum Einbringen nahezu beliebiger Gravurtiefen und -breiten sind aus dem Stand der Technik bekannt.

Die Form der Mikrolinse auf der dem Trägersubstrat abgewandten Seite wird allgemein durch verschiedene Eigenschaften des Trägersubstrats und des transluzenten Kunststoffs bestimmt, wie durch die Form und das Volumen der Vertiefung, der Menge des in eine solche Vertiefung eingefüllten transluzenten Kunststoffs und den Materialeigenschaften von Trägersubstrat und transluzentem Kunststoff. Vorteilhafterweise wird die Oberflächenspannung des transluzenten Kunststoffs auf dem Trägersubstrat so eingestellt, dass sich für die Linsenoberfläche auf der dem Trägersubstrat abgewandten Seite eine für optische Zwecke geeignete Oberfläche ergibt, beispielsweise eine Linsenoberfläche mit einer kugelbogen- oder parabelförmigen Schnittfläche. Somit wird diese Linsenoberfläche nicht durch ein Prägewerkzeug bestimmt, wie dies aus dem Stand der Technik bekannt ist. Dadurch entfallen einerseits die bislang notwendig Bereitstellung eines solchen hoch präzisen Werkzeugs und andererseits ein entsprechender Prägeschritt, so dass sich das Herstellungsverfahren insgesamt verkürzt und vereinfacht.

Alternativ oder zusätzlich kann auch die Vorderseite des Trägersubstrats mit einem solchen transluzenten Kunststoff zumindest bereichsweise bedeckt werden. Dadurch bilden sich im Bereich der Erhebungen, also im Bereich der durch das Tiefdruckverfahren entstandenen Positivstruktur, konkave Ausformungen in dem aufgebrachten transluzenten Kunststoff aus, wobei ebenfalls Mikrolinsen entstehen. Ein solches Bedecken der Vorderseite des Trägersubstrats dient gleichzeitig dem Erzeugen einer ebenen Oberfläche auf der Vorderseite des Trägersubstrats, dem mechanischen Verstärken des Trägersubstrats und/oder dem gezielten Beeinflussen der optischen Brechkraft der Gesamtanordnung.

Das Trägersubstrat umfasst vorzugsweise Papier und/oder eine Trägerfolie, insbesondere eine transluzente Trägerfolie. Im einfachsten Fall besteht das Trägersubstrat vollständig entweder aus Papier oder aus Kunststoff. Das Trägersubstrat kann jedoch auch bereichsweise aus verschiedenen Materialien bestehen, und insbesondere in einem Bereich aus Papier und zugleich in einem anderen Bereich aus Kunststoff, vorzugsweise aus einer transluzenten Trägerfolie, bestehen. Dadurch ist es möglich, verschiedene Materialien als Trägersubstrat in einem Arbeitsgang zu verprägen. Unter transluzenter Trägerfolie wird hierbei entweder eine transparente oder eine semitransparente Trägerfolie verstanden, beispielsweise eine lasierende Trägerfolie, welche beispielsweise Polyamid, Polyester, Polyethylen oder biaxial orientiertes Polypropylen (BOPP) umfasst.

Vorzugsweise wird das Befüllen der Vertiefungen auf der Rückseite des Trägersubstrats derart durchgeführt, dass sich plan- oder bikonvexe Linsen auf der Rückseite des Trägersubstrats ausbilden. Die gewünschte Form der Linsen kann dabei anhand des verwendeten transluzenten Kunststoffs und dessen Trocknungsverhalten, insbesondere durch eine mit dem Trocknen einhergehende Volumenveränderung, beispielsweise eine Volumenreduzierung (Volumenschrumpf), eingestellt werden. Dabei begünstigt der Volumenschrumpf, der bei der Polymerisation bzw. beim Aushärten von UV-härtbaren Lacken auftritt, die Ausbildung von bikonvexen Linsen.

Bikonvexe Linsen zeigen bei gegebener Menge von aufgebrachtem transluzentem Kunststoff oder bei vorgegebener Aufbauhöhe der rückseitig erzeugten Mikrolinsen eine größtmögliche positive Brechkraft und besitzen somit aufgrund der beidseitigen Krümmung gegenüber plan-konvexen Linsen verbesserte optische Eigenschaften. Wenn nun ergänzend weiterer transluzenter Kunststoff auf die Vorderseite eines transluzenten Trägersubstrats aufgebracht wird, ergeben sich im Bereich der Erhebungen konkave, insbesondere plan-konkave Mikrolinsen, welche eine negative Brechkraft aufweisen. Damit kann die positive Brechkraft der rückseitig erzeugten bikonvexen Linsen abgeschwächt und auf diese Weise gezielt die Fokallänge der Gesamtanordnung eingestellt werden. Dies kann anhand der Wahl des Brechungsindex des zur Herstellung der vorderseitigen Mikrolinsen verwendeten transluzenten Kunststoffs geschehen, wobei allgemein mit steigendem Brechungsindex des Linsenmaterials die Brechkraft einer Linse zunimmt.

Die erzeugten Mikrolinsen können auf Vorder- und/oder Rückseite des Trägersubstrats prinzipiell sowohl als sphärische Linsen als auch als Zylinderlinsen, insbesondere als geschwungene Zylinderlinsen, ausgebildet werden.

Vorzugsweise sind die in den Vertiefungen auf der Rückseite des Trägersubstrats angeordneten Mikrolinsen voneinander beabstandet und räumlich voneinander getrennt angeordnet. Dadurch bildet sich in jeder Vertiefung eigenständig eine Mikrolinse aus, ohne dass eine gegenseitige Beeinflussung benachbarter Mikrolinsen auftritt. Dabei ist der Abstand benachbarter Mikrolinsen zweckmäßig so gering wie möglich gewählt, um eine möglichst hohe Flächendeckung und damit in Zusammenwirkung beispielsweise mit einem im Folgenden näher erläuterten Sicherheitselement eine kontrastreiche Darstellung zu gewährleisten. Es ist jedoch auch möglich, die Mikrolinsen zusammenhängend anzuordnen, so dass sich eine durchgehende, vollflächige Schicht aus transluzentem Kunststoff ergibt, welche die Mikrolinsen umfasst.

Das Befüllen der Vertiefungen auf der Rückseite des Trägersubstrats und/ oder das Bedecken der Vorderseite des Trägersubstrats mit dem transluzenten Kunststoff geschieht mit Vorteil drucktechnisch, beispielsweise im Flexodruck- oder Siebdruckverfahren. Dadurch kann sowohl die Menge als auch der Ort des abgegebenen transparenten Kunststoffs gut gesteuert werden. Insbesondere ist es dadurch möglich, die einzelnen Mikrolinsen auf der Rückseite des Trägersubstrats mit verschiedenen Farben zu erzeugen. Allgemein können durch den Druck variierbare Parameter der Mikrolinsen für jede dieser Mikrolinsen einzeln gewählt werden. Zudem stellen das Flexodruck- und auch das Siebdruckverfahren gängige Druckverfahren dar, mit deren Hilfe auf einfache Art und Weise und somit kostengünstig sowie mit hoher Geschwindigkeit gedruckt werden kann.

Vorzugsweise weist der aufgebrachte Kunststoff einen hohen Brechungsindex auf und beinhaltet dazu beispielsweise nanoskalische, transparente Teilchen mit hohem anorganischen Pigmentanteil, z. B. Titandioxid oder Zinkoxid. Der Brechungsindex des aufgebrachten Kunststoffs kann auch durch Zugabe von Zink- und/oder Kalziumionen erhöht werden. Eine weitere Möglichkeit ist das Einbringen von transparenten, optisch stark brechenden Kugeln oder Hohlkugeln, welche vorzugsweise aus PMMA (Polymethylmethacrylat) gebildet sind. Weiterhin kann der transluzente Kunststoff auch eingefärbt sein und/oder optisch variable Effektpigmente enthalten. Zudem können auch Monomere mit hohem Brechungsindex verwendet werden.

Materialien mit einem hohen Brechungsindex besitzen vorzugsweise einen Brechungsindex von mehr als 1,5, bevorzugt mehr als 1,6 und besonders bevorzugt mehr als 1,7. Als solche Materialien kommen beispielsweise organische Verbindungen und Kombinationen von organischen Verbindungen in Betracht, die sich zu einem Lacksystem verarbeiten lassen und bei Bestrahlung, insbesondere bei UV- oder Elektronen-Bestrahlung, einer Polyreaktion unterliegen und zu einem Polymermaterial, das heißt einem Polymer, einem Copolymer oder einem Gemisch von Polymeren und/oder Copolymeren mit hohem Brechungsindex vernetzen bzw. aushärten. Als organische Verbindung denkbar sind in diesem Zusammenhang halogenierte Acrylate, Methacrylate oder aromatische Acrylate.

Der zur Bildung der Mikrolinsen aufgebrachte transluzente Kunststoff ist somit vorzugsweise ein optisch wirksamer Lack, welcher in einem weiteren Herstellungsschritt getrocknet oder im Falle von UV-Härtung unmittelbar nach Aufbringung aushärtet und dadurch fixiert wird. Das Trocknen geschieht bei lösungsmittelbasierten Lacken durch Verdampfen des Lösungsmittels, wobei solche lösungsmittelbasierte Lacke aufgrund ihres Trocknungsmechanismus zur Schaffung von Mikrolinsen nur bedingt geeignet sind. Bevorzugt sind daher aushärtbare Lacke, bei denen das Trocknen durch Aushärten, beispielsweise bei einer erhöhten Temperatur oder durch UV-Bestrahlung, geschieht, da der Trocknungsvorgang hierbei keine oder nur eine geringfügige Volumenänderung des aufgebrachten optischen Lacks bedingt und somit die Ausbildung von symmetrischen Mikrolinsen, wie beispielsweise bikonvexen Linsen, unterstützt. Dieser Effekt beruht auf Oberflächen- und Volumenschrumpfungseffekten während des Trocknungsvorgangs.

Als optischer Lack eignet sich hierbei ein nicht mattierter, durch UV-Bestrahlung härtender Lack, d.h. ein Lack, der keine Mattierungsmittel enthält. Beispielsweise ist der optische Lack ein Acrylatsystem mit etwa 5 bis 10% Monomeren, etwa 3 bis 7% Photoinitiatoren und etwa 0,5 bis 1% Silikon- oder Mineralöl-basiertem Entschäumer. Für die Verwendung in einem Flexodruckverfahren liegt die Viskosität des optischen Lacks beim Drucken vorzugsweise zwischen etwa 0,1 und 1 Pas. Für die Verwendung in einem Siebdruckverfahren beträgt die Viskosität vorzugsweise etwa 0,5 bis 5 Pas.

Beispielsweise ist der optische Lack ein Acrylatsystem mit etwa 5 bis 25% Oligomeren (bevorzugt Polyuretanacrylate oder Polyesteracrylate), etwa 5 bis 25% bi- oder multifunktionellen Monomeren auf Basen von Acrylat- oder Methacrylaten, etwa 5 bis 7% Photoinitiatoren, etwa 5 bis 25% Reaktivverdünner (auf Basis von Acrylaten oder Methacrylaten wie beispielsweise 1,6-Hexadiol Diacrylat), etwa 5 bis 15% transparenten Füllstoffen und bis etwa 5% Additiven. Die Viskosität eines solchen optisch wirksamen UV-Siebdrucklacks liegt vorzugsweise im Bereich von 0,5 bis 5,0 Pas bei einer Scherrate von d = 250 s⁻¹ und einer Temperatur von 20 °C.

Es ist prinzipiell möglich, die Materialien des Trägersubstrats und der Mikrolinsen so zu wählen, dass sie sich leicht voneinander trennen lassen, um einzelne Mikrolinsen herzustellen. Zum Herstellen eines Mikrolinsensubstrats werden die Mikrolinsen dagegen mit dem Trägersubstrat fest verbunden. Dazu ist es zweckmäßig, wenn die beiden Materialien ein physikalische oder gegebenenfalls chemische Verbindung eingehen, entweder direkt oder beispielsweise durch Vorsehen einer zusätzlichen Primerschicht.

Vorteilhafterweise werden zum Vorstrukturieren durch Blindverprägen in einer Tiefdruckplatte regelmäßige, beispielsweise rasterartig angeordnete, identische Vertiefungen geschaffen, wodurch eine regelmäßige Anordnung von identischen Mikrolinsen erhalten werden kann und somit ein Mikrolinsenarray erhalten wird. Das blind verprägte Trägersubstrat ist dabei ein Teil des Mikrolinsensubstrats. Gegebenenfalls wird das Mikrolinsensubstrat auf die gewünschte Größe zugeschnitten.

Alternativ können in der Tiefdruckplatte auch Vertiefungen mit verschiedenen Breiten und/oder Tiefen vorgesehen werden. Ebenso kann eine raster- oder gitterartige Anordnung der Vertiefungen mit bereichsweise verschiedenen Winkeln oder eine partielle Anordnung solcher Vertiefungen in geometrischen Formen oder Motiven vorgesehen sein. Damit lassen sich entsprechend verschiedene Vertiefungen und Erhebungen in dem Trägersubstrat schaffen.

Besteht das vorstrukturierte Trägersubstrat bereichsweise oder vollständig aus einer transluzenten Trägerfolie, so wird ein Mikrolinsensubstrat bzw. eine Mikrolinsenfolie geschaffen. Diese kann als Verifikationsmittel für einen Datenträger verwendet werden. Zum Einsatz als Verifikationsmittel wird die Mikrolinsenfolie vorzugsweise mit einem oder vielen Abstandshaltern oder einer zusätzlichen Abstandsschicht versehen, um einen geeigneten Abstand zwischen der Mikrolinsenfolie und einem zu verifizierenden Sicherheitselement sicherzustellen. Vorzugsweise umfasst die Abstandsschicht zusätzlich optisch stark brechende Kugeln oder Hohlkugeln, um die Brechkraft der Mikrolinsenfolie des Verifikationsmittels zu erhöhen.

Die Mikrolinsenfolie ist vorzugsweise spiegelsymmetrisch aufgebaut, wobei sich die Symmetrieebene durch die Mittenebene der bikonvexen Mikrolinsen, parallel zum Trägersubstrat der Mikrolinsenfolie erstreckt. Sie ist insbesondere optisch symmetrisch aufgebaut, so dass die Mikrolinsenfolie als Verifikationsmittel dienen kann, unabhängig von der Richtung aus welcher während der Verifikation durch die Mikrolinsenfolie beobachtet wird. Mit anderen Worten kann von beiden Seiten durch die Mikrolinsenfolie hindurch ein darunterliegendes Sicherheitselement betrachtet werden. Dieser optisch symmetrische bzw. spiegelsymmetrische Aufbau kann dadurch geschaffen werden, dass das Trägersubstrat für den Strahlengang innerhalb der Mikrolinsenfolie keine oder eine nur geringe Rolle spielt, was beispielsweise durch eine ausreichend dünne Schichtdicke des Trägersubstrats sichergestellt werden kann. Ein solches symmetrisches Verifikationsmittel gestattet zum einen eine vereinfachte Handhabung der Mikrolinsenfolie als Verifikationsmittel, da die Verifikation unabhängig von der Betrachtungsrichtung durch die Mikrolinsenfolie hindurch stattfinden kann. Zum anderen kann ein solches symmetrisches Verifikationsmittel vorzugsweise zur Selbstverifikation auf Datenträgern, insbesondere Banknoten, oder auch zur Verifikation von sonstigen, auf Datenträgern aufgebrachten Sicherheitselementen eingesetzt werden.

Die vorstehenden Ausführungen zu symmetrischen bzw. optisch symmetrischen Mikrolinsenfolien gelten grundsätzlich auch für asymmetrische Mikrolinsenfolien. Allerdings weisen z.B. plan-konvexe Linsen gegenüber bikonvexen Linsen eine vergrößerte Fokuslänge auf. Demzufolge sind Mikrolinsenfolien mit symmetrischen Linsen im Rahmen der vorliegenden Erfindung, insbesondere zur Verifikation unabhängig von der Betrachtungsrichtung durch die Mikrolinsenfolie, besonders bevorzugt.

Zur Selbstverifikation wird der Datenträger, vorzugsweise eine Banknote, gefaltet und das Verifikationsmittel mit einem Sicherheitselement in Deckung gebracht. Insbesondere bei einem symmetrischen Aufbau des Verifikationsmittels kann das Verifikationsmittel mit Vorteil in verschiedene Richtungen gefaltet werden und dabei mit verschiedenen Sicherheitselementen zur Verifikation zusammenwirken. Dabei ist die Handhabung des Verifikationsmittels bei einem symmetrischen Aufbau der Mikrolinsenfolie für den Betrachter besonders einfach, da die Mikrolinsenfolie für beide Betrachtungsrichtungen die gleiche Fokuslänge aufweist. Beispielsweise kann das Verifikationsmittel um eine Faltachse herum wahlweise auf eine Vorderseite oder eine Rückseite des Datenträgers geklappt werden. Weiterhin können auch mehrere Faltachsen in dem Datenträger vorgesehen sein, wobei das Verifikationsmittel mit jeweils zwei Sicherheitselementen pro Faltachse zusammenwirken kann.

Das erfindungsgemäße Mikrolinsensubstrat, insbesondere in Form einer Mikrolinsenfolie, kann auch zum Erzeugen eines vollständigen Sicherheitsmerkmals für einen Datenträger verwendet werden. Dazu wird vorzugsweise der transluzente Kunststoff der Mikrolinsen und/oder das Trägersubstrat im Bereich der rückseitigen Vertiefungen mit einer geeigneten rasterartigen Mikrobildstruktur versehen, insbesondere bedruckt. Dadurch kann ein Mikrorefraktionsbild, vorzugsweise unter Verwendung des Moire-Vergrößerungseffekts, geschaffen werden.

Die Erfindung betrifft auch die Verwendung eines Trägersubstrats, welches vorstrukturiert, bevorzugt verprägt, besonders bevorzugt im Tiefdruckverfahren, insbesondere im Stichtiefdruck-Verfahren blindverprägt wurde, so dass sich Erhebungen auf einer Vorderseite sowie den Erhebungen im Wesentlichen entsprechende Vertiefungen auf einer der Vorderseite gegenüberliegenden Rückseite befinden, als Linsenabformkörper zur Herstellung von Mikrolinsen.

Schließlich enthält die Erfindung auch einen Datenträger, insbesondere ein Wertdokument, einen Markenartikel oder dergleichen, mit einem Mikrolinsensubstrat der oben beschriebenen Art. Das Mikrolinsensubstrat kann dabei vollflächig, auf Teilflächen oder in einem Fensterbereich des Datenträgers angeordnet sein.

Die vorliegende Erfindung zeichnet sich gegenüber aus dem Stand der Technik bekannten Sicherheitsmerkmalen durch einen sehr viel einfacheren Aufbau und ein entsprechend einfaches Herstellungsverfahren aus. Insbesondere können mehrfarbige Motive und Kippmotive in einfacher Weise geschaffen werden.

Weitere Ausführungsbeispiele und Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig.1: eine schematische Darstellung einer Banknote mit Sicherheitsmerkmalen;
- Fig. 2a und 2b: eine Draufsicht und einen Querschnitt einer erfindungsgemäßen Linsenstruktur;
- Fig. 3a bis 3f: jeweils verschiedene Ausführungsbeispiele einer erfindungsgemäßen Mikrolinsenfolie; und
- Fig. 4a bis 4e: jeweils verschiedene Ausführungsbeispiele eines erfindungsgemäßen Sicherheitselementes.

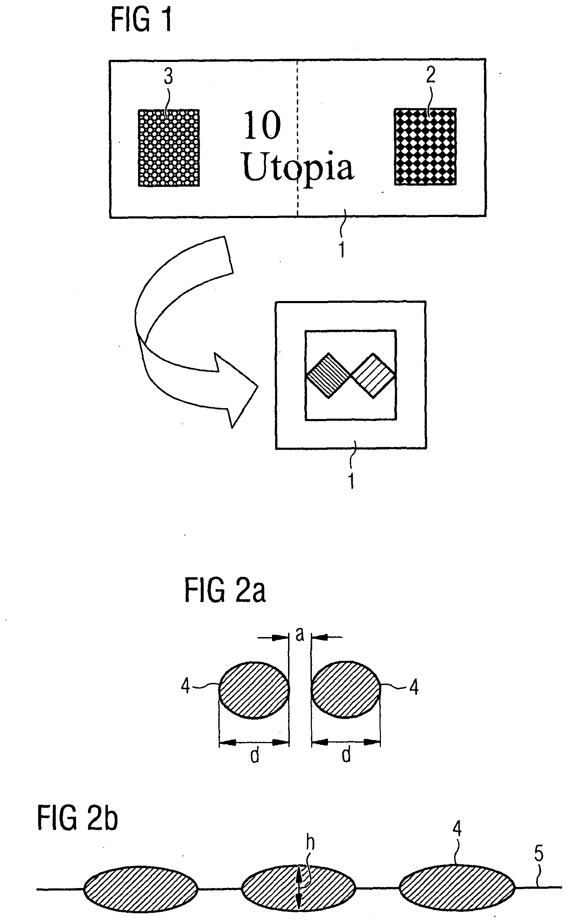

In Fig. 1 ist als Datenträger eine Banknote 1 dargestellt. Diese umfasst ein Sicherheitsmerkmal in Form eines Sicherheitselements 2 und eines Verifikationsmittels 3. Das Verifikationsmittel 3 besteht aus einer Mikrolinsenfolie, während das Sicherheitselement 2 im Ausführungsbeispiel als rasterartige Mikrobildstruktur aufgebaut ist. Das Verifikationsmittel 3 kann durch Falten entlang der in Fig. 1 strichliniert dargestellten Faltachse der Banknote 1 mit dem Sicherheitselement 2 in Deckung gebracht werden, wodurch ein Sicherheitsmerkmal entsteht, wie dies im unteren Teil der Fig. 1 dargestellt ist. Dabei ist die Mikrobildstruktur des Sicherheitselementes 2 beispielsweise aufgrund des Moire-Vergrößerungseffekts vergrößert erkennbar. Eine solche Echtheitsprüfung kann in vielen verschiedenen Varianten ausgestaltet sein. Beispielsweise kann dabei die Durchsicht durch das Verifikationsmittel 3 je nach Aufbau von verschiedenen Seiten erfolgen.

Dazu weist die Mikrolinsenfolie des Verifikationsmittels 3 bedingt durch eine bikonvexe Ausformung der Mikrolinsen eine Spiegelsymmetrie zu einer Substratebene auf, die durch die Mittenebene der bikonvexen Mikrolinsen 4 verläuft. Bei Vorliegen eines solchen spiegelsymmetrischen Aufbaus des Verifikationsmittels 3, kann eine Beobachtung eines darunterliegenden Sicherheitselements 2 in beide Richtungen durch das Verifikationsmittel 3 erfolgen, wobei dies aufgrund des spiegelsymmetrischen Aufbaus des Verifikationsmittels 3, wie bereits weiter oben erwähnt, für den Betrachter besonders einfach möglich ist, d.h. ein solches Verifikationsmittel weist eine besonders gute Handhabung auf. Entsprechend ist vorgesehen, dass das Verifikationsmittel 3 zur Selbstverifikation durch Falten der Banknote sowohl nach vorne als auch nach hinten geklappt werden kann, um dann wahlweise mit einem auf der Vorderseite oder einem auf der Rückseite der Banknote 1 aufgebrachten Sicherheitselement 2 in Deckung gebracht zu werden. Beim Zusammenwirken von Verifikationsmittel 3 und dem jeweiligen Sicherheitselement 2 wird das jeweils gewünschte Sicherheitsmerkmal ausgebildet.

Als Substratmaterial für den Datenträger kommt im Fall einer Banknote 1 jede Art von Papier in Betracht, insbesondere Baumwoll-Velinpapier. Selbstverständlich kann auch Papier eingesetzt werden, dass einen Anteil x an polymerem Material enthält, wobei x zwischen 0 und 100 Gew.-% liegen kann.

Das Substratmaterial der Banknote 1 bzw. allgemein eines Datenträgers kann auch eine Kunststofffolie, wie etwa eine Polyesterfolie, sein. Die Folie kann monoaxial oder biaxial gereckt sein. Eine Reckung der Folie führt unter anderem dazu, dass sie lichtpolarisierende Eigenschaften erhält, die als weiteres Sicherheitsmerkmal genutzt werden können. Das Substratmaterial kann auch ein mehrschichtiger Verbund sein, der wenigstens eine Schicht aus Papier oder einem papierähnlichen Material enthält. Ein solcher Verbund, der auch als Substratmaterial für Banknoten eingesetzt werden kann, zeichnet sich durch eine außerordentlich große Stabilität aus, die für die Haltbarkeit der Note bzw. des Datenträgers von großem Vorteil ist.

Als Substratmaterial kommt ferner ein mehrschichtiges, papierfreies Kompositmaterial in Betracht, das insbesondere in manchen Klimaregionen der Erde mit Vorteil eingesetzt werden kann.

Im Allgemeinen kann das erfindungsgemäße Verifikationsmittel mit Vorteil in einem transparenten/transluzenten Bereich des Substrats angeordnet sein. Der transparente/ transluzente Bereich kann dadurch realisiert werden, dass in einem opaken Substratmaterial, z.B. Papier, eine fensterartige Durchbrechung vorgesehen wird (Durchgangsöffnung), die durch ein erfindungsgemäßes Verifikationsmittel, z.B. eine Mikrolinsenfolie, im Wesentlichen vollflächig verschlossen wird. Die Durchgangsöffnung kann dabei während der Herstellung des Substrats (sogenanntes "Büttenloch") oder nachträglich durch Schneiden oder Stanzen, insbesondere Laserstrahlschneiden, erzeugt werden.

Alle Substratmaterialien können Zusatzstoffe enthalten, die als Echtheitsmerkmale dienen können. Dabei kommen insbesondere Lumineszenzstoffe infrage, die im sichtbaren Wellenlängenbereich vorzugsweise transparent sind und in einem nicht sichtbaren Wellenlängenbereich durch geeignete Hilfsmittel, wie etwa eine UV- oder IR-Strahlung emittierende Quelle, angeregt werden können, um eine direkt sichtbare oder mit Hilfsmitteln nachweisbare Lumineszenzstrahlung zu erzeugen.

Das zu verifizierende Sicherheitselement 2 kann im Allgemeinen verschieden aufgebaut sein, beispielsweise als Mikro-Druckbereich mit feiner Punkt- oder Linienrasterstruktur, als Strukturraster mit versteckter Information, als mehrfarbige, übereinandergelegte Rasterstrukturen und/oder als verprägte Rasterstruktur mit und ohne farbführendem Element, beispielsweise mit einer reflektierenden, metallischen Schicht.

Ein starker Interferenz- bzw. Vergrößerungseffekt wird mit einem Linienraster erzielt, dessen Größenordnung der Periodizität der Größenordnung der Periodizität des Verifikationsmittels 3 entspricht und beispielsweise 300 µm beträgt. Dabei beträgt die Breite der Linien jeweils 150 µm und die Breite des jeweils dazwischen liegenden, beispielsweise unbedruckten Weißraums ebenfalls 150 µm.

Bei einem in das Sicherheitselement 2 integrierten Bildmotiv beträgt die Linienmodulation von den hellen bis zu den dunklen Bildbereichen vorzugsweise 100 bis 150 µm. Neben einem einfachen Linienraster kann auch ein Versatzraster verwendet werden.

Statt eines Linienrasters kann das Sicherheitselement 2 auch als ein periodisch wiederkehrendes Motiv oder Symbol vorliegen. Dessen Rapport (Periodizität) wird dabei in Abhängigkeit zu den Prägestrukturen angelegt.

Ein weiterer beim Verifizieren visuell stark wahrnehmbarer Effekt wird mit einem Linienraster im Mehrfarbendruck erzielt. Hierzu werden farbige Linien (beispielsweise CMY, Cyan, Magenta, Yellow) Stoß an Stoß, das heißt direkt aneinanderliegend, gedruckt.

Bei Betrachtung solcher Strukturen durch ein Verifikationsmittel 3 mit einer rasterartigen Mikrolinsenanordnung mit sphärischen Linsen ergibt sich rechtwinklig zu den Untergrundlinien eine starke Vergrößerung mit räumlicher Anmutung. Durch Kippen wird der Eindruck einer fließenden Bewegung erzeugt, wobei die Bewegung jeweils im rechten Winkel zur Kipprichtung erfolgt. Der zugrunde liegende Mechanismus basiert auf dem in den bereits oben erwähnten Artikeln "The moiré magnifier" und "Properties of moire magnifiers" beschriebenen Mechanismus.

Die in den nachfolgenden Ausführungsbeispielen gemäß Figuren 2a bis 3f gezeigte Mikrolinsenfolie 6 kann als ein solches Verifikationsmittel 3 für Datenträger 1 gemäß Fig. 1 eingesetzt werden.

Fig. 2a zeigt eine schematische Draufsicht auf zwei benachbarte sphärische Mikrolinsen 4 auf einem nicht dargestellten Trägersubstrat. Die Mikrolinsen 4 besitzen im Ausführungsbeispiel einen Durchmesser d von etwa 500 µm und einen Abstand a von etwa 2 µm. Die räumliche Periodizität einer solchen Mikrolinsenanordnung beträgt somit in etwa 500 µm. In Fig. 2b ist ein schematischer Querschnitt der Mikrolinsenanordnung dargestellt. Neben den Mikrolinsen 4 ist auch das Trägersubstrat 5 schematisch dargestellt. In den dargestellten Ausführungsbeispielen wird das Trägersubstrat 5 im Stichtiefdruck-Verfahren blindverprägt. Die Mikrolinsen 4 besitzen eine Höhe h von etwa 60 µm. Die Gravurtiefe der Vertiefungen in der für das Verprägen des Trägersubstrats 5 verwendeten Tiefdruckplatte beträgt etwa 100 µm. Die Dicke des Trägersubstrats 5 liegt im Bereich von etwa 15 bis etwa 100 µm und ist im Idealfall vernachlässigbar.

Generell liegen in den Ausführungsbeispielen die Durchmesser bzw. im Fall von Zylinderlinsen die Breite d der Mikrolinsen im Bereich zwischen etwa 50 und etwa 500 µm. Die Gravurtiefen der Vertiefungen in der Tiefdruckplatte liegen im Bereich zwischen etwa 20 und etwa 200 µm und die Gravurbreiten im Bereich zwischen etwa 50 und etwa 500 µm. Da die rückseitigen Prägestrukturen des Trägersubstrats 5 im Wesentlichen vollständig mit optischem Lack gefüllt werden, entspricht die Breite d der Mikrolinsen im Wesentlichen der Gravurbreite. Dies gilt insbesondere dann, wenn die Dicke des Trägersubstrats 5 demgegenüber vernachlässigbar ist.

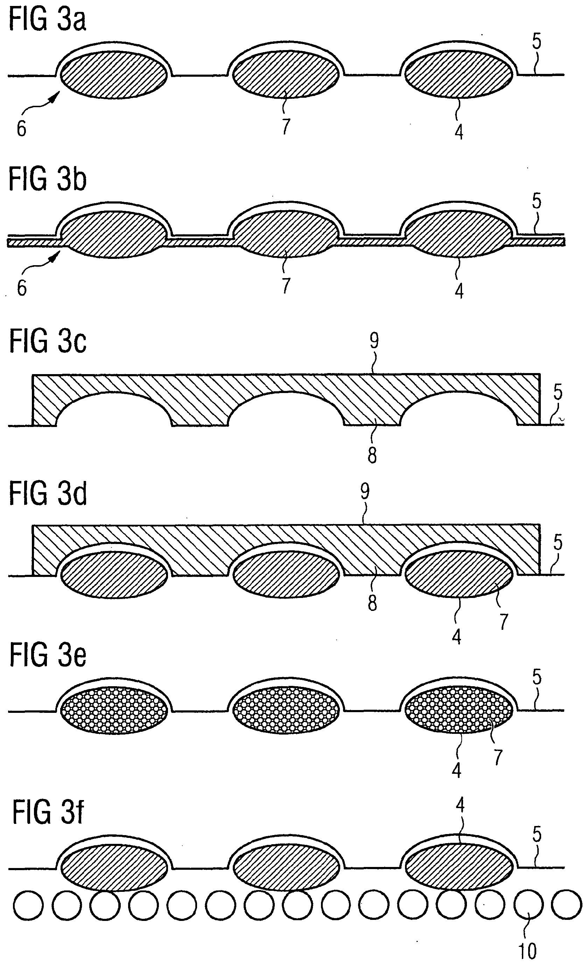

Fig. 3a zeigt schematisch ein erstes Ausführungsbeispiel für eine Mikrolinsenanordnung 6, welche als Verifikationsmittel verwendet werden kann. Das Trägersubstrat 5 ist dabei eine transparente Trägerfolie, welche im Tiefdruckverfahren verprägt wurde. In den dabei auf der Rückseite, d.h. der vorher der Tiefdruckplatte bzw. Stichtiefdruckplatte abgewandten Seite, der Trägerfolie 5 entstandenen Vertiefungen sind Mikrolinsen 4 angeordnet, welche aus einem optisch wirksamen, transluzenten Lack 7 bestehen. Der Lack 7 kann dabei transparent oder, solange er zumindest lasierend ist, auch farbig sein. Die Mikrolinsen 4 sind hierbei zueinander beabstandet angeordnet.

Alternativ können die Mikrolinsen 4 jedoch auch innerhalb einer durchgehenden, vollflächigen Schicht aus optischem Lack angeordnet sein, wie dies in Fig. 3b dargestellt ist. Die Herstellung von Mikrolinsen in einer durchgehenden Schicht aus optischem Lack ist generell einfacher zu realisieren als die Herstellung einer Vielzahl einzelner Mikrolinsen.

In Fig. 3c ist wiederum eine verprägte Trägerfolie schematisch dargestellt, bei der die Vorderseite mit einer Schicht 9 aus optischem Lack 8 bedeckt ist. Die außen liegende Oberfläche der optischen Lackschicht 9 ist eben, und die optische Lackschicht 9 bildet die durch die Verprägung der Trägerfolie 5 entstandene Positivstruktur ab, so dass in dem Bereich der Erhebungen des Trägersubstrats 5 plan-konkave Mikrolinsen entstehen.

In Fig. 3d ist eine Kombination der Ausführungsbeispiele aus den Figuren 3a und 3c dargestellt. Hierbei sind gleichzeitig die Vertiefungen auf der Rückseite der transparenten Trägerfolie 5 mit optischem Lack 7 zur Bildung der Mikrolinsen 4 befüllt und die Vorderseite der Trägerfolie 5 mit einer Schicht 9 aus optischem Lack 8 vollflächig bedeckt. Dadurch wird die optische Brechkraft der Mikrolinsen 4 abgeschwächt, wobei dennoch eine positive Brechkraft der Gesamtanordnung verbleibt, da die bikonvexen Mikrolinsen 4 auf der Rückseite der Trägerfolie 5 eine stärkere positive Brechkraft haben als die plan-konkaven Mikrolinsen in der vorderseitigen Lackschicht 9. Auf diese Weise lässt sich unter anderem eine gezielte Beeinflussung der optischen Brechkraft der Mikrolinsenanordnung erreichen.

Das in Fig. 3e dargestellte Ausführungsbeispiel entspricht in seinem räumlichen Aufbau dem in Fig. 3a dargestellten Ausführungsbeispiel. In dem optischen Lack 7 der rückseitig erzeugten Mikrolinsen 4 sind jedoch transparente, optisch stark brechende Kugeln oder Hohlkugeln eingebracht, welche einen hohen Brechungsindex aufweisen und beispielsweise aus PMMA (Polymethylmethacrylat), Polystyrol oder Polycarbonat gefertigt sind. Die Größe der Kugeln liegt im Bereich zwischen 1 und 50 µm und beträgt beispielsweise 2, 3, 5, 10, 20 oder 30 µm, je nach den vorliegenden Abmessungen der diese enthaltenden Mikrolinsen.

Das in Fig. 3f dargestellte Ausführungsbeispiel baut wiederum auf dem in Fig. 3a dargestellten Ausführungsbeispiel auf. Zusätzlich ist hier eine Abstandsschicht 10 als Abstandshalter vorgesehen. Diese Schicht kann wie dargestellt aus optisch stark brechenden Kugeln oder Hohlkugeln mit einem Durchmesser von beispielsweise etwa 50 µm bestehen. Sie kann jedoch auch aus einer geeigneten Kunststofffolie, beispielsweise in Form eines Etiketts, bestehen. Die Abstandsschicht 10 kann auf die Vorderseite und/oder auf die Rückseite der Trägerfolie 5 aufgebracht werden.

Alternativ zu dem in Fig. 3f gezeigten Ausführungsbeispiel kann ein Abstandshalter auf der Vorderseite des Substrats durch eine Erhebung mit großer Höhe realisiert werden. Solche Erhebungen, die höher als die durch die erfindungsgemäße Vorstrukturierung des Trägersubstrats der Vorderseite gebildeten Erhebungen sind, werden z.B. durch entsprechend tief gravierte Tiefdruckplatten erzeugt.

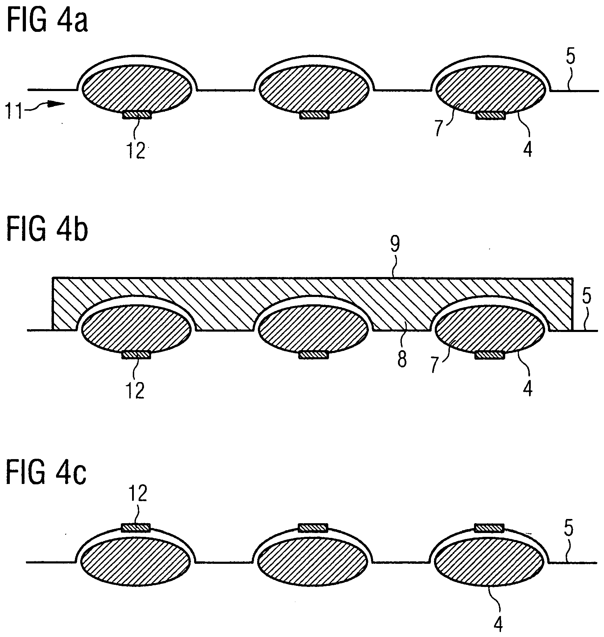

In Fig. 4a ist ein erstes Ausführungsbeispiel eines Sicherheitsmerkmals 11 dargestellt, bei welchem ein Sicherheitselement 2 und ein Verifikationselement 3, beispielsweise eine Mikrolinsenfolie 6, zu einem vollständigen Sicherheitsmerkmal 11 zusammengefasst sind. Mit dem dargestellten Sicherheitsmerkmal 11 kann beispielsweise ein Moire-Vergrößerungseffekt erreicht werden. Zur Herstellung eines erfindungsgemäßen Sicherheitsmerkmals 11 wird eine transparente Trägerfolie 5 mit einer halbkugelförmige Vertiefungen aufweisenden Stichtiefdruckplatte blindverprägt und die rückseitigen Vertiefungen mit transluzentem Lack 7 befüllt und getrocknet, um sphärische Mikrolinsen 4 zu erzeugen. Zusätzlich werden die Mikrolinsen 4 mit einer ein- oder mehrfarbigen Rasterstruktur 12 bedruckt. Zum Aufdrucken der Rasterstruktur 12 eignen sich beispielsweise Offset-, Tief-, Flexo- oder Siebdruckverfahren.

Die Mikrolinsen 4 sind dabei rasterartig angeordnet und bilden ein zweidimensionales Bravais-Gitter mit einer vorgewählten Symmetrie. Das Bravais-Gitter kann beispielsweise eine hexagonale Gittersymmetrie aufweisen, es sind jedoch auch Gitter mit einer niedrigeren Symmetrie, insbesondere der Symmetrie eines Parallelogramm-Gitters möglich.

Der Abstand benachbarter Mikrolinsen 4 ist vorzugsweise so gering wie möglich gewählt, um eine möglichst hohe Flächendeckung und damit eine kontrastreiche Darstellung zu gewährleisten. Die sphärisch ausgestalteten Mikrolinsen 4 weisen vorzugsweise einen Durchmesser zwischen etwa 50 µm und etwa 500 µm auf, vorzugsweise größer als 200 µm.

Die auf die der Trägerfolie 5 abgewandten Seite der Mikrolinsen 4 aufgedruckte Rasterstruktur 12 enthält eine rasterartige Anordnung von identischen Mikrobildelementen. Auch die Rasterstruktur 12 bildet ein zweidimensionales Bravais-Gitter mit einer vorgewählten Symmetrie, beispielsweise mit hexagonaler Gittersymmetrie oder der Symmetrie eines Parallelogramm-Gitters.

Um den gewünschten Moire-Vergrößerungseffekt zu erzeugen, unterscheidet sich das Bravais-Gitter der Mikrobildelemente der Rasterstruktur 12 dabei in seiner Symmetrie und/oder Größe seiner Gitterparameter erfindungsgemäß geringfügig von dem Bravais-Gitter der Mikrolinsen 4. Die Gitterperiode der Mikrobildelemente liegt dabei in derselben Größenordnung wie die der Mikrolinsen 4, also im Bereich von etwa 50 µm und etwa 500 µm, vorzugsweise größer als 200 µm.

Die optische Dicke der Trägerfolie 5 und die Brennweite der Mikrolinsen 4 sind so aufeinander abgestimmt, dass sich die Rasterstruktur 12 und damit die Mikrobildelemente etwa im Abstand der Linsenbrennweite befinden oder in den benötigten Abstand gebracht werden können, beispielsweise zur Selbstverifikation. Aufgrund der sich geringfügig unterscheidenden Gitterparameter sieht der Betrachter bei Betrachtung von oben durch die Mikrolinsen 4 hindurch jeweils einen etwas anderen Teilbereich der Mikrobildelemente, so dass die Vielzahl der Mikrolinsen 4 insgesamt ein vergrößertes Bild der Mikrobildelemente erzeugt. Die sich ergebende Moire-Vergrößerung hängt dabei von dem relativen Unterschied der Gitterparameter der verwendeten Bravais-Gitter ab. Unterscheiden sich beispielsweise die Gitterperioden zweier hexagonaler Gitter um 1%, so ergibt sich eine 100-fache Moire-Vergrößerung. Für eine ausführlichere Darstellung der Funktionsweise und für vorteilhafte Anordnungen der Mikrobildelementraster und der Mikrolinsenraster wird auf die Druckschriften DE 10 2005 062132 A1 und WO 2007/076952 A2 verwiesen, deren Offenbarungsgehalt insoweit in die vorliegende Anmeldung aufgenommen wird.

Das in Fig. 4b dargestellte Ausführungsbeispiel entspricht im Aufbau dem in Fig. 4a dargestellten Ausführungsbeispiel, wobei hier jedoch sowohl die rückseitigen Vertiefungen mit transluzentem Lack 7 befüllt sind als auch eine transluzente Lackschicht 9 auf der Vorderseite der transparenten Trägerfolie 5 aufgebracht ist.

In dem in Fig. 4c dargestellten Ausführungsbeispiel wird in einem ersten Verfahrensschritt die ein- oder mehrfarbige Rasterstruktur 12 nicht auf die beispielsweise zylinderförmigen Mikrolinsen 4, sondern auf die transparente Trägerfolie 5 aufgedruckt. Anschließend wird die Trägerfolie 5 im Tiefdruckverfahren verprägt und in die rückseitigen Vertiefungen zur Ausbildung von Mikrolinsen 4 beispielsweise mit transparentem Lack 7 befüllt. Zusätzlich oder alternativ kann wie im Ausführungsbeispiel gemäß Fig. 4b auch auf der Vorderseite der transparenten Trägerfolie 5 eine Schicht 9 aus optischem Lack 8 vorgesehen werden.

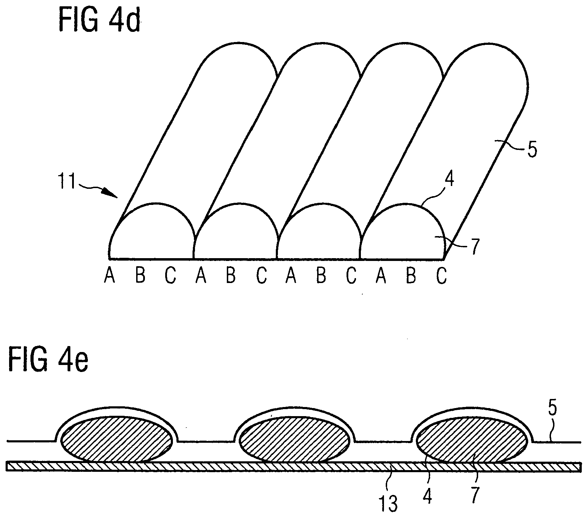

Das in Fig. 4d dargestellte Sicherheitsmerkmal 11 wird durch die folgenden Verfahrensschritte hergestellt:
- Blindverprägen einer zylinderförmigen Struktur in eine transluzente Trägerfolie 5 im Stichtiefdruckverfahren,
- Befüllen der rückseitigen Vertiefungen mit transluzentem Lack 7 zur Ausbildung von Zylinderlinsen 4 und
- Bedrucken der Rückseite im Offset-, Tief-, Flexo- oder Siebdruckverfahren mit ein- oder mehrfarbigen Informationen, welche entsprechend der Zylinderlinsen 4 in Streifen zerlegt sind.
Dabei deuten in Fig. 4d die sich periodisch wiederholenden Buchstaben A, B und C die in Streifen zerlegte Information schematisch an. Es können somit verschiedene Effekte, wie Flip-, Zoom-, Morphing- oder dreidimensionale Darstellungen, erzeugt werden.

Das in Fig. 4e dargestellte Ausführungsbeispiel des Sicherheitsmerkmals 11 wird durch folgende Verfahrensschritte erhalten:
- Blindverprägen einer beispielsweise sphärischen Struktur in eine transluzente Trägerfolie 5 im Stichtiefdruckverfahren,
- Befüllen von Vertiefungen auf der Rückseite der transluzenten Trägerfolie 5 mit einem transparenten oder farbigen Lack 7 zur Ausbildung von sphärischen Mikrolinsen und
- Aufbringen einer bedruckten Folie 13, beispielsweise in Form eines Etiketts.
Da die Folie 13 bereits vor dem Aufbringen bedruckt wird, kann sie mit Vorteil in einem planen, ebenen Zustand bedruckt werden, vorzugsweise mit einem Offsetdruckverfahren oder auch mit einem Flexo-, Tief- oder Siebdruckverfahren.

Ein weiteres, hier nicht gezeigtes Ausführungsbeispiel des Sicherheitsmerkmals 11 wird durch folgende Verfahrensschritte erhalten:
- Blindverprägen einer beispielsweise sphärischen Struktur in eine transluzente Trägerfolie 5 im Stichtiefdruckverfahren,
- Befüllen von Vertiefungen in der Rückseite der transluzenten Trägerfolie 5 mit transparentem oder farbigem Lack 7 zur Ausbildung von sphärischen Mikrolinsen,
- Aufdrucken einer Abstandsschicht 10 auf den transparenten oder farbigen Lack 7, beispielsweise in Form von lösungsmittelbasiertem Lack oder in Form von in einen Lack eingebrachten, optisch stark brechenden Kugeln, und
- Bedrucken der Abstandsschicht 10 mit einer Rasterstruktur 12.

Ein weiteres Ausführungsbeispiel des Sicherheitsmerkmals 11 wird durch die folgenden Verfahrensschritte erhalten:
- Bedrucken einer transluzenten Trägerfolie 5 mit transluzenter, UV-härtbarer Stichdruckfarbe im Stichtiefdruckverfahren,
- Befüllen der damit erzeugten rückseitigen, beispielsweise linienförmigen Struktur mit transparentem oder farbigem Lack 7 zur Ausbildung von Zylinderlinsen und
- Bedrucken des transparenten oder farbigen Lacks 7 im Offset-, Tief-, Flexo- oder Siebdruck mit einer Rasterstruktur 12.
Durch den Aufdruck einer transluzenten Stichtiefdruckfarbe wird die Dicke der Trägerfolie an dieser Stelle erhöht und damit auch die Dicke der Linse. Auf diese Weise lässt sich die Wandstärke der Linsen gezielt beeinflussen.

Ein weiteres Ausführungsbeispiel des Sicherheitsmerkmals 11 wird durch die folgenden Verfahrensschritte erhalten:
- Untergrunddruck, beispielsweise im Offsetdruckverfahren, auf ein Papiersubstrat,
- gegebenenfalls Aufbringen einer Abstandsschicht 10,
- Aufbringen einer transluzenten Folie 5 auf den Untergrunddruck oder die Abstandsschicht 10,
- Verprägen des gesamten Schichtaufbaus mittels Stich- oder Rastertiefdruck und
- Aufbringen eines transparenten oder farbigen, UV-aushärtbaren Lacks 7 zur Ausbildung von Mikrolinsen 4.
Die Abstandsschicht 10 verstärkt dabei den optischen Effekt.

Ein weiteres Ausführungsbeispiel des Sicherheitsmerkmals 11 wird durch die folgenden Verfahrensschritte erhalten:
- Blindverprägen einer beispielsweise sphärischen Struktur in eine transluzente Trägerfolie 5 im Stichtiefdruckverfahren,
- rückseitiges Aufbringen einer transparenten oder farbigen Schicht, in welche laserablatierbare Farbstoffe (beispielsweise Ruß) eingebracht sind,
- Einbringen einer Bildinformation in diese Schicht mittels Laser und
- ein- oder beidseitiges Aufbringen von Lack 7 bzw. 8 zur Ausbildung von sphärischen Mikrolinsen.

Ein weiteres Ausführungsbeispiel des Sicherheitsmerkmals 11 wird durch die folgenden Verfahrensschritte erhalten:
- Blindverprägen einer beispielsweise linienförmigen Struktur in eine transluzente Trägerfolie 5, die eine Bildinformation enthält, beispielsweise durch Teilmetallisierung, im Stichtiefdruckverfahren und
- ein- oder beidseitiges Aufbringen eines transparenten oder farbigen Lacks 7 bzw. 8 zur Ausbildung von Zylinderlinsen.

Ein weiteres Ausführungsbeispiel des Sicherheitsmerkmals 11 wird durch die folgenden Verfahrensschritte erhalten:
- Blindverprägen einer beispielsweise sphärischen Struktur in eine vollmetallisierte transluzente Folie im Stichtiefdruckverfahren,
- Einbringen einer Bildinformation in die Folie durch Laserablation und
- ein- oder beidseitiges Aufbringen eines transparenten oder farbigen Lacks 7 bzw. 8 zur Ausbildung von sphärischen Mikrolinsen.

In einem weiteren Ausführungsbeispiel des Sicherheitsmerkmals 11 sind in den transparenten oder farbigen Lack 7, 8 zur Bildung der Mikrolinsen 4 Pigmente mit einer spezifischen Mikroinformation eingebracht. Diese Mikroinformation besteht beispielsweise aus einer besonderen Pigmentform oder aus einer Mikroprägung in Form eines Logos. Aufgrund der Linsenwirkung der Mikrolinsen 4 sieht ein Betrachter die Mikroinformation dabei entsprechend vergrößert.

In allen Ausführungsbeispielen kann als Lack 7, 8 zur Bildung der Mikrolinsen 4 transparenter oder farbiger Lack 7, 8 verwendet werden. Insbesondere können in einer Mikrolinsenanordnung gleichzeitig transparente, farbige und auch untereinander verschiedenfarbige Mikrolinsen vorliegen. Weiterhin kann eine nanoskalische Fluoreszenz in den Lack eingebracht werden. Auf diese Weise kann eine zusätzliche makroskopische Information für einen Betrachter eingebracht werden.

## Patentansprüche

1. Verfahren zum Herstellen von Mikrolinsen (4), umfassend die Schritte:
- Bereitstellen eines Trägersubstrats (5), welches ein Papier und/ oder eine Trägerfolie umfasst, und
- Vorstrukturieren des Trägersubstrats, so dass auf einer Vorderseite des Trägersubstrats Erhebungen entstehen und auf einer der Vorderseite gegenüberliegenden Rückseite des Trägersubstrats den Erhebungen im Wesentlichen entsprechende Vertiefungen entstehen,
- Auftragen von transluzentem Kunststoff (7, 8) auf zumindest eine Seite des Trägersubstrats (5) im Bereich der Erhebungen oder Vertiefungen zur Bildung von Mikrolinsen (4), wobei das Vorstrukturieren des Trägersubstrats (5) durch Verprägen im Tiefdruckverfahren geschieht.

2. Verfahren nach Anspruch 1, **dadurch gekennzeichnet, dass** das Vorstrukturieren des Trägersubstrats durch Blindverprägen im Tiefdruckverfahren, vorzugsweise im Stichtiefdruck-Verfahren, geschieht.

3. Verfahren nach Anspruch 1 oder 2, **dadurch gekennzeichnet, dass** das Trägersubstrat als ein eine transluzente Trägerfolie umfassendes Substrat bereitgestellt wird.

4. Verfahren nach wenigstens einem der vorhergehenden Ansprüche, **dadurch gekennzeichnet, dass** die Mikrolinsen in den Vertiefungen als plan- oder bikonvexe Linsen, insbesondere als Zylinder- oder sphärische Linsen, ausgebildet werden.

5. Verfahren nach wenigstens einem der vorhergehenden Ansprüche, **dadurch gekennzeichnet, dass** der transluzente Kunststoff so auf der Rückseite des Trägersubstrats aufgetragen wird, dass er zwischen den Mikrolinsen räumlich unterbrochen ist oder eine durchgehende Schicht bildet, und/oder **dass** das Befüllen der Vertiefungen drucktechnisch, vorzugsweise im Flexodruck- oder Siebdruckverfahren geschieht, und/oder **dass** mit dem transluzenten Kunststoff transluzente, optisch stark brechende Kugeln oder Hohlkugeln aufgetragen werden.

6. Verfahren nach wenigstens einem der Ansprüche 2 bis 5, **dadurch gekennzeichnet, dass** das Blindverprägen des Trägersubstrats im Tiefdruckverfahren mit einer Tiefdruckplatte erfolgt, die Vertiefungen mit einer Gravurtiefe von etwa 20 µm bis etwa 200 µm und einer Gravurbreite von etwa 50 µm bis etwa 500 µm, bevorzugt von etwa 100 µm bis etwa 500 µm, besonders bevorzugt von etwa 200 µm bis etwa 500 µm aufweist.

7. Verfahren nach wenigstens einem der vorhergehenden Ansprüche, **dadurch gekennzeichnet, dass** der transluzente Kunststoff ein optischer Lack ist und das Verfahren den weiteren Schritt umfasst:
- Trocknen des Lacks, wobei das Trocknen vorzugsweise durch Aushärten, insbesondere bei erhöhter Temperatur oder mittels UV-Bestrahlung, erfolgt.

8. Verfahren zum Herstellen eines Mikrolinsensubstrats, umfassend ein Verfahren zur Herstellung von Mikrolinsen nach wenigstens einem der vorhergehenden Ansprüche, **dadurch gekennzeichnet, dass** die Mikrolinsen mit dem Trägersubstrat fest verbunden werden, und das Mikrolinsensubstrat vorzugsweise einen zu einer Ebene des Trägersubstrats spiegelsymmetrischen Aufbau besitzt.

9. Verfahren nach Anspruch 8, **dadurch gekennzeichnet, dass** die Erhebungen bzw. Vertiefungen in einer regelmäßigen, insbesondere rasterartigen Anordnung erzeugt werden, und/oder dass das Trägersubstrat als transluzente Trägerfolie mit einer Dicke von etwa 15 bis etwa 100 µm vorliegt, vorzugsweise mit einer Dicke von 20, 30, 50 oder 80 µm.

10. Verfahren nach wenigstens einem der Ansprüche 8 bis 9, **gekennzeichnet durch** den weiteren Schritt:
- Aufbringen einer Abstandsschicht, vorzugsweise umfassend optisch stark brechende Kugeln oder Hohlkugeln,
und/oder **durch** den Schritt:
- Bedrucken des transluzenten Kunststoffs und/oder des Trägersubstrats, vorzugsweise im Bereich der Vertiefungen, mit einer Rasterstruktur.

11. Mikrolinsensubstrat (6), umfassend
- ein Papier und/oder eine Trägerfolie umfassendes Trägersubstrat (5) mit eingebrachten Erhebungen auf einer Vorderseite des Trägersubstrats und den Erhebungen im Wesentlichen entsprechenden Vertiefungen auf einer der Vorderseite gegenüberliegenden Rückseite des Trägersubstrats, wobei die Erhebungen und die Vertiefungen durch Verprägen im Tiefdruckverfahren eingebracht sind, und
- eine Mehrzahl von Mikrolinsen (4), welche auf zumindest einer Seite des Trägersubstrats im Bereich der Erhebungen oder Vertiefungen angeordnet sind, wobei die Mikrolinsen (4) aus einem transluzenten Kunststoff ausgebildet sind.

12. Mikrolinsensubstrat nach Anspruch 11, **dadurch gekennzeichnet, dass** das Trägersubstrat eine transluzente Trägerfolie, umfasst.

13. Mikrolinsensubstrat nach Anspruch 11 oder 12, **dadurch gekennzeichnet, dass** die in den Vertiefungen angeordneten Mikrolinsen als plan- oder bikonvexe Linsen, insbesondere als Zylinder- oder sphärische Linsen, ausgebildet sind, und/oder **dass** die Mikrolinsen auf der Rückseite des Trägersubstrats voneinander beabstandet oder miteinander vollflächig verbunden sind, und/oder **dass** die Mikrolinsen transluzente, optisch stark brechende Kugeln oder Hohlkugeln enthalten, und/oder **dass** die Mikrolinsen aus einem ausgehärteten optischen Lack ausgebildet sind.

14. Mikrolinsensubstrat nach wenigstens einem der Ansprüche 11 bis 13, **dadurch gekennzeichnet, dass** die Mikrolinsen mit dem Trägersubstrat fest verbunden sind und eine regelmäßige, insbesondere rasterartige Anordnung aufweisen, wobei das Mikrolinsensubstrat insbesondere einen zu einer Ebene des Trägersubstrats spiegelsymmetrischen Aufbau besitzt.

15. Mikrolinsensubstrat nach Anspruch 14, **dadurch gekennzeichnet, dass** das Trägersubstrat als transluzente Trägerfolie mit einer Dicke von etwa 15 bis etwa 100 µm vorliegt, vorzugsweise mit einer Dicke von 20, 30, 50 oder 80 µm.

16. Mikrolinsensubstrat nach wenigstens einem der Ansprüche 14 bis 15, **gekennzeichnet durch** zumindest einen Abstandshalter, der durch eine Erhebung des Trägersubstrats gebildet wird, und/oder durch eine Abstandsschicht, welche vorzugsweise optisch stark brechende Kugeln oder Hohlkugeln umfasst.

17. Mikrolinsensubstrat nach wenigstens einem der Ansprüche 14 bis 16, **dadurch gekennzeichnet, dass** die Mikrolinsen und/oder das Trägersubstrat mit einer Rasterstruktur bedruckt sind.

18. Verwenden eines Trägersubstrats (5), welches ein Papier und/ oder eine Trägerfolie umfasst und im Tiefdruckverfahren verprägt wurde, insbesondere im Stichtiefdruck-Verfahren blindverprägt wurde, so dass sich Erhebungen auf einer Vorderseite sowie den Erhebungen im Wesentlichen entsprechende Vertiefungen auf einer der Vorderseite gegenüberliegenden Rückseite befinden, als Linsenabformkörper zur Herstellung von Mikrolinsen (4) durch Auftragen von transluzentem Kunststoff (7, 8) auf zumindest einer Seite des Trägersubstrats (5) im Bereich der Erhebungen oder Vertiefungen.

19. Datenträger, insbesondere Wertdokument, Markenartikel oder dergleichen, umfassend ein Mikrolinsensubstrat nach einem der Ansprüche 11 bis 17, welches ein Verifikationsmittel bildet.

20. Datenträger nach Anspruch 19, **gekennzeichnet durch** zumindest ein erstes und ein zweites Sicherheitselement und zumindest eine Faltachse, entlang welcher der Datenträger zu beiden Seiten wahlweise gefaltet werden kann, so dass das Mikrolinsensubstrat zur Verifikation wahlweise mit dem ersten oder dem zweiten Sicherheitselement zusammenwirkt.

## Claims

1. A method for manufacturing microlenses (4), comprising the steps of:
- providing a carrier substrate (5) which comprises a paper and/or a carrier foil, and
- prestructuring the carrier substrate, so that elevations arise on a front side of the carrier substrate, and depressions corresponding substantially to the elevations arise on a back side of the carrier substrate opposing the front side,
- applying translucent plastic (7, 8) to at least one side of the carrier substrate (5) in the region of the elevations or depressions for forming microlenses (4), the prestructuring of the carrier substrate (5) being effected by embossing by gravure printing process.

2. The method according to claim 1, **characterized in that** the prestructuring of the carrier substrate is effected by blind embossing by gravure printing, preferably by intaglio printing.

3. The method according to claim 1 or 2, **characterized in that** the carrier substrate is provided as a substrate comprising a translucent carrier foil.

4. The method according to at least one of the preceding claims, **characterized in that** the microlenses in the depressions are configured as plano- or biconvex lenses, in particular as cylindrical or spherical lenses.

5. The method according to at least one of the preceding claims, **characterized in that** the translucent plastic is applied to the back side of the carrier substrate such that it is spatially interrupted between the microlenses or forms a continuous layer, and/or that the filling of the depressions is effected by printing technology, preferably by flexographic printing or screen printing, and/or that with the translucent plastic there are applied translucent, strongly optically refractive spheres or hollow spheres.

6. The method according to at least one of claims 2 to 5, **characterized in that** the blind embossing of the carrier substrate is effected by gravure printing with a gravure printing plate which has depressions with an engraving depth of about 20 µm to about 200 µm and an engraving width of about 50 µm to about 500 µm, preferably of about 100 µm to about 500 µm, particularly preferably of about 200 µm to about 500 µm.

7. The method according to at least one of the preceding claims, **characterized in that** the translucent plastic is an optical lacquer, and the method comprises the further step of:
- drying the lacquer, the drying being preferably effected by curing, in particular at elevated temperature or by means of UV irradiation.

8. A method for manufacturing a microlens substrate comprising a method for producing microlenses according to at least one of the preceding claims, **characterized in that** the microlenses are firmly connected to the carrier substrate, and the microlens substrate preferably possesses a structure that is mirror-symmetric with respect to a plane of the carrier substrate.

9. The method according to claim 8, **characterized in that** the elevations or depressions are produced in a regular, in particular grid-like, arrangement, and/or that the carrier substrate is present as a translucent carrier foil with a thickness of about 15 to about 100 µm, preferably with a thickness of 20, 30, 50 or 80 µm.

10. The method according to at least one of claims 8 to 9, **characterized by** the further step of:
- applying a spacer layer, preferably comprising strongly optically refractive spheres or hollow spheres,
and/or by the step of:
- printing the translucent plastic and/or the carrier substrate, preferably in the region of the depressions, with a grid structure.

11. A microlens substrate (6), comprising
- a carrier substrate (5) comprising a paper and/or a carrier foil, with incorporated elevations on a front side of the carrier substrate and depressions corresponding substantially to the elevations on a back side of the carrier substrate opposing the front side, the elevations and the depressions being incorporated by embossing by gravure printing, and
- a plurality of microlenses (4) which are arranged on at least one side of the carrier substrate in the region of the elevations or depressions, the microlenses (4) being formed from a translucent plastic.

12. The microlens substrate according to claim 11, **characterized in that** the carrier substrate comprises a translucent carrier foil.

13. The microlens substrate according to claim 11 or 12, **characterized in that** the microlenses arranged in the depressions are configured as plano- or biconvex lenses, in particular as cylindrical or spherical lenses, and/or that the microlenses on the back side of the carrier substrate are spaced apart from each other or are connected to each other over the full area, and/or that the microlenses contain translucent, strongly optically refractive spheres or hollow spheres, and/or that the microlenses are formed from a cured optical lacquer.

14. The microlens substrate according to at least one of claims 11 to 13, **characterized in that** the microlenses are firmly connected to the carrier substrate and have a regular, in particular grid-like, arrangement, the microlens substrate having a structure that is mirror-symmetric with respect to a plane of the carrier substrate.

15. The microlens substrate according to claim 14, **characterized in that** the carrier substrate is present as a translucent carrier foil with a thickness of about 15 to about 100 µm, preferably with a thickness of 20, 30, 50 or 80 µm.

16. The microlens substrate according to at least one of claims 14 to 15, **characterized by** at least one spacer which is formed by an elevation of the carrier substrate, and/or by a spacer layer which preferably comprises strongly optically refractive spheres or hollow spheres.

17. The microlens substrate according to at least one of claims 14 to 16, **characterized in that** the microlenses and/or the carrier substrate are printed with a grid structure.

18. A use of a carrier substrate (5) which comprises a paper and/or a carrier foil and has been embossed by gravure printing, in particular by intaglio printing, so that elevations are located on a front side and depressions corresponding substantially to the elevations on a back side opposing the front side, as a lens mandrel for manufacturing microlenses (4) by applying translucent plastic (7, 8) to at least one side of the carrier substrate (5) in the region of the elevations or depressions.

19. A data carrier, in particular value document, branded article or the like, comprising a microlens substrate according to any of claims 11 to 17 which constitutes a verification means.

20. The data carrier according to claim 19, **characterized by** at least a first and a second security element and at least one folding axis along which the data carrier can be folded selectively on both sides, so that the microlens substrate interacts, for verification, selectively with the first or the second security element.

## Revendications

1. Procédé de fabrication de microlentilles (4), comprenant les étapes :
- mise à disposition d'un substrat porteur (5) comprenant un papier et/ou une feuille support, et
- pré-structuration du substrat porteur de telle façon que, sur une face avant du substrat porteur, des bosses sont engendrées et que, sur une face arrière du substrat porteur opposée à la face avant, des renfoncements correspondant essentiellement aux bosses sont engendrés,
- application de matière plastique translucide (7, 8) sur au moins une face du substrat porteur (5) dans la zone des bosses ou renfoncements afin de constituer des microlentilles (4), cependant que la pré-structuration du substrat porteur (5) est effectuée par gaufrage par procédé d'impression en creux.

2. Procédé selon la revendication 1, **caractérisé en ce que** la pré-structuration du substrat porteur est effectuée par gaufrage à sec par procédé d'impression en creux, de préférence par procédé d'impression en creux par gravure.

3. Procédé selon la revendication 1 ou 2, **caractérisé en ce que** le substrat porteur est mis à disposition sous forme d'un substrat comprenant une feuille support translucide.

4. Procédé selon au moins une des revendications précédentes, **caractérisé en ce que** les microlentilles sont réalisées dans les renfoncements sous forme de lentilles piano-convexes ou biconvexes, en particulier sous forme de lentilles cylindriques ou sphériques.

5. Procédé selon au moins une des revendications précédentes, **caractérisé en ce que** la matière plastique translucide est appliquée de telle façon sur la face arrière du substrat porteur qu'il est spatialement discontinu entre les microlentilles ou constitue une couche continue, et/ou **en ce que** le remplissage des renfoncements est effectué par impression, de préférence par procédé de flexographie ou de sérigraphie, et/ou **en ce que,** avec la matière plastique translucide, des billes translucides, fortement réfringentes optiquement ou billes creuses, sont appliquées.

6. Procédé selon au moins une des revendications de 2 à 5, **caractérisé en ce que** le gaufrage à sec du substrat porteur a lieu par procédé d'impression en creux avec une plaque d'impression en creux qui présente des renfoncements d'une profondeur de gravure située entre environ 20 µm et environ 200 µm et d'une largeur de gravure située entre environ 50 µm et environ 500 µm, de préférence entre environ 100 µm et environ 500 µm, particulièrement de préférence entre environ 200 µm et environ 500 µm.

7. Procédé selon au moins une des revendications précédentes, **caractérisé en ce que** la matière plastique translucide est un vernis optique et que le procédé comprend l'autre étape :
- séchage du vernis, cependant que le séchage a lieu de préférence par durcissement, en particulier à température élevée ou au moyen de rayonnement UV.

8. Procédé de fabrication d'un substrat de microlentilles, comprenant un procédé de fabrication de microlentilles selon au moins une des revendications précédentes, **caractérisé en ce que** les microlentilles sont jointes à demeure au substrat porteur, et que le substrat de microlentilles présente de préférence une disposition à symétrie inversée par rapport à un plan du substrat porteur.

9. Procédé selon la revendication 8, **caractérisé en ce que** les bosses ou renfoncements sont générés en un agencement régulier, en particulier en forme de grille, et/ou que le substrat porteur se trouve sous forme de feuille support translucide d'une épaisseur située entre environ 15 et environ 100 µm, de préférence d'une épaisseur de 20, 30, 50 ou 80 µm.

10. Procédé selon au moins une des revendications de 8 à 9, **caractérisé par** l'autre étape :
- application d'une couche d'espacement, de préférence comprenant des billes fortement réfringentes optiquement ou des billes creuses,
et/ou **par** l'étape :
- impression de la matière plastique translucide et/ou du substrat porteur, de préférence dans la zone des renfoncements, avec une structure en grille.

11. Substrat de microlentilles (6), comprenant
- un substrat porteur (5) comprenant un papier et/ou une feuille support, avec des bosses générées sur une face avant du substrat porteur et des renfoncements correspondant essentiellement aux bosses sur une face arrière du substrat porteur opposée à la face avant, cependant que les bosses et les renfoncements sont générés par gaufrage par procédé d'impression en creux, et
- une pluralité de microlentilles (4) qui sont agencées sur au moins une face du substrat porteur dans la zone des bosses ou renfoncements, cependant que les microlentilles (4) sont réalisées à partir d'une matière plastique translucide.

12. Substrat de microlentilles selon la revendication 11, **caractérisé en ce que** le substrat porteur comprend une feuille support translucide.

13. Substrat de microlentilles selon la revendication 11 ou 12, **caractérisé en ce que** les microlentilles agencées dans les renfoncements sont réalisées sous forme de lentilles piano-convexes ou biconvexes, en particulier sous forme de lentilles cylindriques ou sphériques, et/ou **en ce que** les microlentilles sont espacées entre elles ou jointes entre elles à pleine surface sur la face arrière du substrat porteur, et/ou **en ce que** les microlentilles contiennent des billes translucides, fortement réfringentes optiquement ou billes creuses, et/ou **en ce que** les microlentilles sont réalisées à partir d'un vernis optique durci.

14. Substrat de microlentilles selon au moins une des revendications de 11 à 13, **caractérisé en ce que** les microlentilles sont jointes à demeure au substrat porteur et présentent un agencement régulier, en particulier en forme de grille, cependant que le substrat de microlentilles présente en particulier une disposition à symétrie inversée par rapport à un plan du substrat porteur.

15. Substrat de micro lentilles selon la revendication 14, **caractérisé en ce que** le substrat porteur se trouve sous forme de feuille support translucide d'une épaisseur située entre environ 15 et environ 100 µm, de préférence d'une épaisseur de 20, 30, 50 ou 80 µm.

16. Substrat de microlentilles selon au moins une des revendications de 14 à 15, **caractérisé par** au moins un espaceur constitué par une bosse du substrat porteur, et/ou par une couche d'espacement comprenant de préférence des billes fortement réfringentes optiquement ou des billes creuses.

17. Substrat de microlentilles selon au moins une des revendications de 14 à 16, **caractérisé par** les microlentilles et/ou le substrat porteur sont imprimés avec une structure en grille.

18. Utilisation d'un substrat porteur (5) qui comprend un papier et/ou une feuille support et a été gaufré par procédé d'impression en creux, de préférence gaufré à sec par procédé d'impression en creux par gravure, de telle façon que des bosses se trouvent sur une face avant et que des renfoncements correspondant essentiellement aux bosses se trouvent sur une face arrière opposée à la face avant, comme corps de moulage de lentilles pour la fabrication de microlentilles (4) par application de matière plastique translucide (7, 8) sur au moins une face du substrat porteur (5) dans la zone des bosses ou des renfoncements.

19. Support de données, en particulier document de valeur, article de marque ou objet similaire, comprenant un substrat de microlentilles selon une des revendications de 11 à 17, lequel constitue un moyen de vérification.

20. Support de données selon la revendication 19, **caractérisé par** au moins un premier et un deuxième élément de sécurité et au moins un axe de pliage le long duquel le support de données peut être plié au choix des deux côtés, de telle sorte que le substrat de microlentilles, pour la vérification, co-agit au choix avec le premier ou avec le deuxième élément de sécurité.
